# NEUE EUROPÄISCHE PATENTSCHRIFT

(11) **EP 3 207 585 B2**
(45) Veröffentlichungstag und Bekanntmachung des Hinweises auf die Entscheidung über den Einspruch: **03.11.2021**
(45) Hinweis auf die Patenterteilung: 23.01.2019
(21) Anmeldenummer: 15771149.0
(22) Anmeldetag: 30.09.2015
(51) Int. Cl.: H01M 10/42, B60L 11/12, B60L 11/18, H01M 10/46, H01M 10/48, H01M 16/00, H02J 7/00

(54) **VERFAHREN ZUM BETRIEB EINES STROMNETZES, INSBESONDERE EINES STROMNETZES EINES WASSERFAHRZEUGS**
METHOD FOR THE OPERATION OF A POWER GRID, IN PARTICULAR A POWER GRID OF A WATERCRAFT
PROCÉDÉ DE FONCTIONNEMENT D'UN RÉSEAU ÉLECTRIQUE, NOTAMMENT D'UN RÉSEAU ÉLECTRIQUE D'ENGIN NAUTIQUE

(30) Priorität: 13.10.2014 DE 102014114792
(43) Veröffentlichungstag der Anmeldung: 23.08.2017
(73) Patentinhaber: ThyssenKrupp Marine Systems GmbH, 24143 Kiel (DE); thyssenkrupp AG, 45143 Essen (DE)
(72) Erfinder: DANNENBERG, Norbert, 23628 Krummesse (DE); LEITES, Keno, 22844 Norderstedt (DE)
(74) Vertreter: thyssenkrupp Intellectual Property GmbH
(86) Internationale Anmeldenummer: PCT/EP2015/072581
(87) Internationale Veröffentlichungsnummer: WO 2016/058831

(56) Entgegenhaltungen:
- EP-A1- 2 472 278
- EP-A2- 0 162 030
- EP-A2- 2 377 710
- WO-A1-2013/152397
- AU-A1- 2012 200 438
- DE-A1-102008 020 418
- DE-A1-102011 055 229
- DE-U1-212010 000 081
- JP-A- 2014 011 005
- US-A1- 2008 100 263
- US-A1- 2009 112 495
- US-A1- 2009 261 658
- US-A1- 2011 068 747
- US-A1- 2011 309 795
- US-A1- 2013 026 822
- US-A1- 2013 278 216
- "BlueDrive ESS Operation Manual", Siemens AS, 7 October 2013 (2013-10-07),
- "ENERGY STORAGE SYSTEM Technical Description MV Prins Richard", Siemens AS, 14 March 2014 (2014-03-14),
- "ENERGY STORAGE SYSTEM Technical Description MV Deutschland", Siemens AS, 25 September 2014 (2014-09-25),
- Anonymous: "Prins Richard (Schiff) Wikipedia", , 19 August 2019 (2019-08-19), pages 1-3, Retrieved from the Internet: URL:https://de.wikipedia.org/w/index.php?t itle=Prins_Richard_(Schiff)&oldid=19148254 7

## Beschreibung

### Stand der Technik

Die vorliegende Erfindung betrifft ein Verfahren zum Betrieb eines Stromnetzes, insbesondere eines Stromnetzes eines Wasserfahrzeugs, wobei das Stromnetz mit einer Batterievorrichtung zur Zwischenspeicherung von Energie verbunden ist. Ein weiterer Gegenstand der Erfindung ist ein Energieversorgungssystem, insbesondere für ein Wasserfahrzeug, mit einem Stromnetz, welches mit einer Batterievorrichtung zur Zwischenspeicherung von Energie verbunden ist.

Wasserfahrzeuge wie z. B. Unterseeboote weisen üblicherweise ein Stromnetz auf, über welches elektrische Verbraucher an Bord des Wasserfahrzeugs mit elektrischer Energie versorgt werden. Bei den elektrischen Verbrauchern kann es sich beispielsweise um einen elektrischen Antrieb des Wasserfahrzeugs, eine Klimatisierungseinrichtung oder eine Waffensteuerung handeln. Bei dem Zuschalten und/oder Abschalten solcher Verbraucher kommt es zu Schwankungen des Bedarfs an elektrischer Energie, welche in der Regel über eine Batterievorrichtung kompensiert werden.

Ein derartiges Stromnetz mit einer Batterieeinrichtung ist beispielsweise aus der DE 10 2008 020 418 A1 bekannt. In der Batterieeinrichtung dieses Stromnetzes wird überschüssige Energie zwischengespeichert und dann bei Bedarf wieder in das Stromnetz abgegeben.

Beim Betrieb dieses Stromnetzes hat sich jedoch herausgestellt, dass sich die Stromrichtung an der Batterieeinrichtung infolge von häufigen Wechseln zwischen dem Laden und dem Entladen der Batterievorrichtung sehr oft ändert, wodurch die Lebensdauer der Batterieeinrichtung negativ beeinflusst wird.

Die AU 2012 200 438 A1 offenbart ein weiteres derartiges System.

### Offenbarung der Erfindung

Vor diesem Hintergrund ist es Aufgabe der vorliegenden Erfindung, die Lebensdauer der Batterievorrichtung zu erhöhen.

Gelöst wird die Aufgabe durch ein Verfahren gemäß Patentanspruch 1.

Zur Lösung der Aufgabe wird ferner ein Energieversorgungssystem gemäß Patentanspruch 6 vorgeschlagen.

Die Batterievorrichtung weist erfindungsgemäß mehrere Teilbatterien auf, wobei eine Teilbatterie in einem Entlade-Modus und die andere Teilbatterie in einem Lade-Modus betrieben wird. In dem Entlade-Modus kann die jeweilige Teilbatterie Energie in das Stromnetz abgeben. In dem Lade-Modus kann die jeweilige Teilbatterie Energie aus dem Stromnetz aufnehmen. Somit stehen zur Kompensation von Lastschwankungen gleichzeitig zwei Teilbatterien zur Verfügung, wobei die eine Teilbatterie zur Stützung des Stromnetzes durch Abgabe von Energie und die andere Teilbatterie zur Stützung des Stromnetzes durch Aufnahme von Energie beiträgt. Aufgrund dieser Aufteilung von möglichen Lade- bzw. Entladevorgängen auf zwei Teilbatterien der Batterievorrichtung wechselt die Stromrichtung der Teilbatterien weniger oft, wodurch die Lebensdauer der Batterievorrichtung erhöht werden kann.

Bevorzugt ist eine Teilbatterie im Lade-Modus nicht entladbar, so dass die Teilbatterie im Lade-Modus aus dem Stromnetz geladen werden, aber nicht durch Abgabe von Energie in das Stromnetz entladen werden kann. Besonders bevorzugt kann die Teilbatterie im Lade-Modus ihre Ladung im Wesentlichen halten und bei Bedarf aus dem Stromnetz geladen werden. Es ist ferner bevorzugt, wenn eine Teilbatterie im Entlade-Modus nicht aufladbar ist, so dass die Teilbatterie im Entlade-Modus Energie an das Stromnetz abgeben kann, aber nicht Energie aus dem Stromnetz aufnehmen kann. Besonders bevorzugt kann die Teilbatterie im Entlade-Modus ihre Ladung im Wesentlichen halten und bei Bedarf Energie in das Stromnetz abgeben. Im Lade-Modus und/oder Entlade-Modus können Selbstentladungsphänomene auftreten, welche eine Entladung der Batterie ohne Abgabe von Energie in das Stromnetz zur Folge haben.

Bei dem erfindungsgemäßen Verfahrens wird wenigstens eine dritte Teilbatterie der Batterievorrichtung in einem Standby-Modus betrieben, in welchem die Teilbatterie nicht aufladbar und nicht entladbar ist. Die Batterievorrichtung kann derart ausgestaltet sein, dass eine dritte Teilbatterie in einem Standby-Modus betreibbar ist. Im Standby-Modus kann die Teilbatterie weder durch Aufnahme von Energie aus den Stromnetz aufgeladen noch durch Abgabe von Energie in das Stromnetz entladen werden. Im Standby-Modus wird die Teilbatterie nur wenig beansprucht, so dass eine nochmalige Verbesserung der Lebensdauer der Batterievorrichtung erreicht werden kann. Bevorzugt wird die dritte Teilbatterie im Standby-Modus betrieben während eine erste Teilbatterie im Lade-Modus und eine zweite Teilbatterie im Entlade-Modus betrieben wird. Die dritte Teilbatterie bildet insofern eine wenig beanspruchte zusätzliche Einheit, welche bei Bedarf zusätzlich zu oder anstelle der ersten Teilbatterie oder der zweiten Teilbatterie in den Lade-Modus oder den Entlade-Modus versetzt werden kann, wodurch eine gewisse Redundanz erzeugt wird. Beim Ausfall einer Teilbatterie der Batterievorrichtung kann diese dauerhaft in den Standby-Modus versetzt werden, so dass nur solche Teilbatterien aufgeladen und entladen werden, die funktionstüchtig sind.

Gemäß der Erfindung ist vorgesehen, dass die Teilbatterie im Standby-Modus einen Standby-Ladezustand aufweist, welcher abhängig von einer Batteriechemie der Teilbatterie ausgewählt wird. Durch eine derartige Wahl des Standby-Ladezustands kann die Lebensdauer der Teilbatterie und damit auch der Batterievorrichtung erhöht werden. Bevorzugt liegt der Standby-Ladezustand der Teilbatterie im Bereich von 50% bis 70%, besonders bevorzugt bei ca. 66%, was sich als vorteilhaft für solche Teilbatterien herausgestellt hat, die nach Art einer Lithium-Ionen Batterie ausgebildet sind. Bei einer Teilbatterie, welche als Bleibatterie ausgebildet ist, liegt der Standby-Ladezustand bevorzugt bei ca. 100%. Der Ladezustand (engl. State of Charge, SoC) einer Teilbatterie kann über die Messung der relativen Dichte des Elektrolyts und/oder des pH-Werts des Elektrolyts und/oder der Batteriespannung und/oder des Batteriestroms und/oder der internen Drucks in der Batterie ermittelt werden. Alternativ kann der Entladungsgrad (engl. Depth of Discharge) der Teilbatterie ermittelt werden.

Bevorzugt werden die Teilbatterien im Lade-Modus und/oder im Entlade-Modus innerhalb eines vorgegebenen Ladezustandsbereichs betrieben, wie nachfolgend näher erläutert werden soll.

Gemäß der Erfindung ist vorgesehen, dass die erste Teilbatterie aus dem Lade-Modus in den Entlade-Modus übergeht, wenn der Ladezustand dieser Teilbatterie einen vorgegebenen Maximalwert erreicht. Durch das Umschalten der Teilbatterie vom Lade-Modus in den Entlade-Modus kann eine schädigende Überladung der Teilbatterie verhindert werden. Beispielsweise kann dann, wenn der Ladezustand einer ersten Teilbatterie einen vorgegebenen Maximalwert erreicht, die erste Teilbatterie aus dem Lade-Modus in den Entlade-Modus übergehen und eine zweite Teilbatterie aus dem Entlade-Modus in den Lade-Modus übergehen. Die beiden Batterien können insofern ihre Funktionalität tauschen.

Gemäß der Erfindung ist vorgesehen, dass die zweite Teilbatterie aus dem Entlade-Modus in den Lade-Modus übergeht, wenn der Ladezustand dieser Teilbatterie einen vorgegebenen Mindestwert erreicht, so dass eine schädigende Tiefentladung der Teilbatterie verhindert wird. Beispielsweise kann dann, wenn der Ladezustand einer zweiten Teilbatterie einen vorgegebenen Minimalwert erreicht, die zweite Teilbatterie aus dem Entlade-Modus in den Lade-Modus übergehen und eine erste Teilbatterie aus dem Lade-Modus in den Entlade-Modus übergehen. Die beiden Batterien können insofern ihre Funktionalität tauschen.

Gemäß der Erfindung ist vorgesehen, dass die erste oder die zweite Teilbatterie in den Standby-Modus übergeht, wenn der Ladezustand der Teilbatterie einen vorgegebenen Standby-Ladezustand erreicht. Dies bringt den Vorteil mit sich, dass die Teilbatterien beim Wechsel in den Standby-Modus und beim Wechsel aus dem Standby-Modus einen im Wesentlichen gleichen Ladezustand, nämlich den Standby-Ladezustand, aufweisen. Erfindungsgemäß geht eine dritte Teilbatterie aus dem Standby-Modus in den Entlade-Modus oder den Lade-Modus über, wenn die erste Teilbatterie oder die zweite Teilbatterie in den Standby-Ladezustand übergeht, so dass ein Austausch von Teilbatterien stattfindet, wobei der dem Stromnetz zur Verfügung stehende Ladezustand unverändert bleibt.

Das Energieversorgungssystem weist bevorzugt eine Brennstoffzelle und/oder einen Generator auf. Die Brennstoffzelle und/oder der Generator können elektrische Energie in das Stromnetz einspeisen. Besonders bevorzugt ist die Brennstoffzelle als Festoxidbrennstoffzelle (engl. solid oxide fuel cell, SOFC) ausgebildet. Die Brennstoffzelle kann mit einem Reformer verbunden sein, aus welchem Brennstoff, z B. Wasserstoff, in die Brennstoffzelle einleitbar ist. Der Reformer kann derart ausgebildet sein, dass aus einem dem Reformer zugeführten Kohlenwasserstoff, wie z. B. Diesel, Methanol oder Ethanol, der Brennstoff für die Brennstoffzelle gewonnen wird. Der Generator kann als Diesel-Generator ausgestaltet sein.

Das erfindungsgemäße Verfahren zum Betrieb eines Stromnetzes und das erfindungsgemäße Energieversorgungssystem bringen bei der Verwendung einer Brennstoffzelle den Vorteil mit sich, dass Brennstoffzellen, insbesondere Festoxidbrennstoffzellen als vollwertiger Ersatz für einen Generator eingesetzt werden können. Bei der Verwendung eines Generators bietet das erfindungsgemäße Verfahren und das Energieversorgungssystem den Vorteil, dass transiente Belastungen eines Motors des Generators verringert werden können. Dadurch kann die durchschnittliche Dauer bis zu einer Überholung (engl. time between overhaul, TBO) erhöht werden, Körperschall und oder Rußbildung reduziert werden und es kann zu einer geringeren Schadstoffbildung, insbesondere eine geringeren Bildung von CO₂ kommen.

Bevorzugt wird die Kraftstoffzufuhr der Brennstoffzelle, insbesondere die Kraftstoffzufuhr des mit der Brennstoffzelle verbundenen Reformers und/oder die Kraftstoffzufuhr des Generators in Abhängigkeit von der Summe der Ströme der Teilbatterien eingestellt, so dass die Leistung der Brennstoffzelle und/oder des Generators an den Energiebedarf des Stromnetzes angepasst werden kann. Die Kraftstoffzufuhr zu der Brennstoffzelle bzw. dem Generator erfolgt somit unabhängig davon, welche Teilbatterien sich im Lade-Modus, Entlade-Modus oder Standby-Modus befinden. Alternativ kann vorgesehen sein, dass die Kraftstoffzufuhr der Brennstoffzelle, insbesondere die Kraftstoffzufuhr des mit der Brennstoffzelle verbundenen Reformers, und/oder die Kraftstoffzufuhr des Generators in Abhängigkeit von der Summe der elektrischen Leistung aller Teilbatterien eingestellt wird.

Eine bevorzugte Ausgestaltung sieht vor, dass die Teilbatterien jeweils über einen Laderegler mit einem Gleichspannungszwischenkreis des Stromnetzes verbunden sind, wobei der Laderegler eine vorgegebene Gleichspannung in dem Gleichspannungszwischenkreis einstellt. Die Steuerung der Laderegler kann entkoppelt von der Steuerung der Brennstoffzelle und/oder der Steuerung des Generators erfolgen. Somit ist es auf Seiten der Steuerung der Brennstoffzelle bzw. auf Seiten der Steuerung des Generators nicht erforderlich, auf rasche Änderungen des Lastbedarfs zu reagieren. Die Brennstoffzelle und/oder der Generator können über längere Zeit in einem im Wesentlichen konstanten Betriebspunkt gehalten werden, während die Schwankungen im Leistungsbedarf von der Batterievorrichtung kompensiert werden. Auf diese Weise kann die Stabilität und Robustheit des Energieversorgungssystems verbessert werden. Bevorzugt sind die Laderegler als bidirektionale Laderegler, besonders bevorzugt als bidirektionale DC/DC-Wandler ausgebildet, so dass der Laderegler sowohl das Laden als auch das Entladen der jeweiligen Teilbatterie steuern kann.

Eine weitere vorteilhafte Ausgestaltung sieht vor, dass der Gleichspannungszwischenkreis über einen DC/AC-Wandler mit einem Wechselspannungsnetz des Stromnetzes verbunden ist, wobei der DC/AC-Wandler eine vorgegebene Wechselspannung in dem Wechselspannungsnetz einstellt. An das Wechselspannungsnetz können Wechselspannungsverbraucher angeschlossen werden. Bevorzugt ist das Wechselspannungsnetz als mehrphasiges Wechselspannungsnetz, insbesondere als Dreiphasenwechselstromnetz oder als Drehstromnetz, ausgebildet. Der DC/AC-Wandler ist bevorzugt als bidirektionaler DC/AC-Wandler ausgebildet.

In einer bevorzugten Ausgestaltung weist das Energieversorgungssystem einen Lastwiderstand auf, der, insbesondere getaktet, mit dem Stromnetz verbindbar ist, um anstelle oder zusätzlich zu der Batterievorrichtung Energie aufzunehmen. Der Lastwiderstand kann mit dem Stromnetz verbunden werden, wenn die Batterievorrichtung oder eine Teilbatterie der Batterievorrichtung keine zusätzlich Energie aufnehmen kann und/oder wenn die Spannung in dem Stromnetz einen vorgegebenen Spannungsschwellenwert übersteigt und/oder wenn die Frequenz in dem Stromnetz einen vorgegebenen Frequenzschwellenwert übersteigt.

Die vorstehend beschriebenen vorteilhaften Merkmale können, allein oder in Kombination, sowohl bei dem erfindungsgemäßen Verfahren als auch bei dem erfindungsgemäßen Energieversorgungssystem zur Anwendung kommen.

Weitere Einzelheiten, Merkmale und Vorteile der Erfindung ergeben sich aus den Zeichnungen, sowie aus der nachfolgenden Beschreibung von bevorzugten Ausführungsformen anhand der Zeichnungen. Die Zeichnungen illustrieren dabei lediglich beispielhafte Ausführungsformen der Erfindung, welche den Erfindungsgedanken nicht einschränken.

### Kurze Beschreibung der Figuren

Die **Figur 1** zeigt ein erstes Ausführungsbeispiel eines erfindungsgemäßen Energieversorgungssystems in einem Blockdiagramm.
Die **Figur 2** zeigt ein zweites Ausführungsbeispiel eines erfindungsgemäßen Energieversorgungssystems in einem Blockdiagramm.
Die **Figur 3** zeigt ein drittes Ausführungsbeispiel eines erfindungsgemäßen Energieversorgungssystems in einem Blockdiagramm.
Die **Figur 4** zeigt ein Beispiel einer Lastkurve des erfindungsgemäßen Energieversorgungssystems.

### Ausführungsformen der Erfindung

In den verschiedenen Figuren sind gleiche Teile stets mit den gleichen Bezugszeichen versehen und werden daher in der Regel auch jeweils nur einmal benannt bzw. erwähnt.

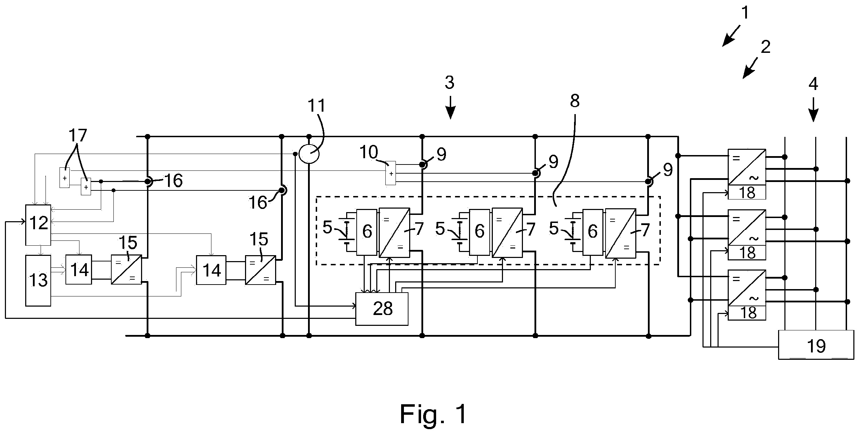

Die **Figur 1** zeigt ein Energieversorgungssystem 1 eines militärischen Wasserfahrzeugs, welches als Überwasserschiff oder Unterseeboot ausgebildet sein kann. Zur Versorgung elektrischer Verbraucher des Wasserfahrzeugs, wie z. B. eines elektrischen Antriebs, einer Klimatisierungseinrichtung oder einer Waffensteuerung, weist das Energieversorgungssystem ein Stromnetz 2 sowie als Energiequellen mehrere mit dem Stromnetz 2 verbundene Brennstoffzellen 14 auf. Die Brennstoffzellen 14 speisen elektrische Energie in einen Gleichspannungszwischenkreis 3 des Stromnetzes 2 ein. Der Gleichspannungszwischenkreis 3 ist derart mit einem Drehstromnetz 4 des Stromnetzes 2 verbunden, dass Energie bidirektional zwischen dem Gleichspannungszwischenkreis 3 und dem Drehstromnetz 4 übertragen werden kann. Die elektrischen Verbraucher sind mit dem Gleichspannungszwischenkreis 3 und/oder dem Drehstromnetz 4 verbunden und aus Gründen der Übersichtlichkeit in der Figur 1 nicht dargestellt.

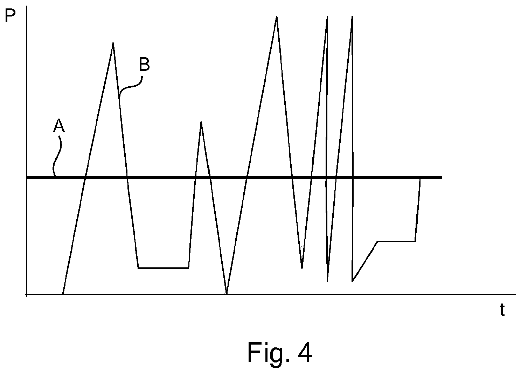

Zur Kompensation von Schwankungen des Energiebedarfs beim Zuschalten und/oder Abschalten von Verbrauchern ist bei dem Energieversorgungssystem 1 ferner eine Batterievorrichtung 8 vorgesehen. Wenn die durch die Brennstoffzellen 14 bereitgestellte Leistung die von den Verbrauchern benötigte Leistung übersteigt, so wird überschüssige Energie in der Batterievorrichtung 8 zwischengespeichert. Die in der Batterievorrichtung 8 gespeicherte Energie kann dann an die Verbraucher abgegeben werden, wenn die von den Verbrauchern benötigte Leistung die von den Brennstoffzellen 14 bereitgestellte Leistung übersteigt. Durch diese Pufferung ist es nicht erforderlich, bei Schwankungen des Leistungsbedarfs den Betriebspunkt der Brennstoffzellen 14 zu verändern. Vielmehr können die Brennstoffzellen 14 in einem im Wesentlichen konstanten Betriebspunkt betrieben werden. Der Betriebspunkt der Brennstoffzellen 14 kann langsam und für die Brennstoffzellen 14 schonend verändert werde. Die Änderung des Betriebspunkts kann dabei einer zeitlich gemittelten Lastanforderung folgen, wobei sich die Dauer der Mittelung an der Dynamik der Brennstoffzellen 14 orientiert. Zur Veranschaulichung dieses Prinzips ist in der **Figur 4** die im Wesentlichen konstant verlaufende Lastkurve A der Brennstoffzellen 14 bzw. eines Generators dargestellt. Die Lastkurve A beschreibt den Verlauf der Leistung P gegenüber der Zeit t. Im Vergleich dazu ist eine Lastkurve B des erfindungsgemäßen Energieversorgungssystems 1 gezeigt. Durch das An- und Abschalten von Verbrauchern ergeben sich sprunghafte Laständerungen. Die Grundlast wird durch die Brennstoffzellen 14 abgedeckt, kurzfristige Abweichungen von der Grundlast der Brennstoffzellen 14 werden durch die Batterievorrichtung 8 gepuffert. Beim Übersteigen der Grundlastlinie A wird die Batterievorrichtung 8 entladen, bei Unterschreiten der Grundlastlinie A wird die Batterievorrichtung 8 aufgeladen

Bei dem Energieversorgungssystem 1 gemäß **Figur 1** sind spezielle Maßnahmen getroffen. Um ein häufiges Wechseln zwischen dem Laden und dem Entladen der einzelnen Batteriezellen der Batterievorrichtung 8 zu vermeiden, weist die Batterievorrichtung 8 drei Teilbatterien 5 auf. Die Teilbatterien 5 sind als Lithium-Ionen Batterien ausgebildet. Eine erste Teilbatterie 5 wird in einem Entlade-Modus betrieben, in welchem die Teilbatterie 5 zur Aufnahme überschüssiger Energie aus dem Stromnetz 2 aufladbar ist, aber nicht durch Abgabe von Energie in das Stromnetz 2 entladen werden kann. Eine zweite Teilbatterie 5 wird in einem Entlade-Modus betrieben, in welchem die Teilbatterie 5 zur Abgabe zusätzlicher Energie in das Stromnetz 2 entladbar ist, aber nicht Energie aus dem Stromnetz 2 aufnehmen kann. Die Batterievorrichtung 8 stellt somit zur Kompensation von Lastschwankungen gleichzeitig zwei Teilbatterien 5 zur Verfügung, wobei die eine Teilbatterie 5 zur Stützung des Stromnetzes 2 durch Abgabe von Energie und die andere Teilbatterie 5 zur Stützung des Stromnetzes 2 durch Aufnahme von Energie beiträgt. Aufgrund dieser Aufteilung von möglichen Lade- bzw. Entladevorgängen auf zwei Teilbatterien 5 der Batterievorrichtung 8 wechselt die Stromrichtung der Teilbatterien 5 weniger oft, wodurch sich die Lebensdauer der Batterievorrichtung 8 erhöht.

Eine dritte Teilbatterie 5 der Batterievorrichtung 8 wird gleichzeitig in einem Standby-Modus betrieben, in welchem die Teilbatterie 5 nicht aufladbar und nicht entladbar ist. Die dritte Teilbatterie 5 bildet eine wenig beanspruchte zusätzliche Einheit, welche bei Bedarf zusätzlich zu oder anstelle der ersten Teilbatterie 5 oder der zweiten Teilbatterie 5 in den Lade-Modus oder den Entlade-Modus versetzt werden kann, wodurch eine gewisse Redundanz erzeugt wird. Beim Ausfall einer Teilbatterie 5 der Batterievorrichtung 8 kann die ausgefallene Teilbatterie 5 dauerhaft in den Standby-Modus versetzt werden, so dass nur solche Teilbatterien 5 aufgeladen und entladen werden, die funktionstüchtig sind.

Die Teilbatterien 5 weisen mehrere in Reihe geschaltete Batteriezellen auf. Vorzugsweise sind die Teilbatterien 5 identisch ausgebildet. Die Teilbatterien 5 sind jeweils über einen Laderegler 7 mit dem Stromnetz 2, insbesondere dem Gleichspannungszwischenkreis 3 des Stromnetzes 2, verbunden. An den Ausgangsklemmen der Teilbatterien 5 ist jeweils ein Batterie-Management-System 6 angebunden, über welches der Zustand der Batterie, wie beispielsweise die Batteriespannung oder der Ladezustand, überwacht werden. Die Laderegler 7 sind als bidirektionale DC/DC-Wandler ausgebildet und werden über eine Steuereinrichtung 28, welche als Zwischenkreisregler ausgebildet ist, gesteuert. Die Laderegler 7 werden durch die Steuereinrichtung 28 derart gesteuert, eine vorgegebene Gleichspannung in dem Gleichspannungszwischenkreis 3 eingestellt wird. Insofern wird über die Batterievorrichtung 8 die Gleichspannung des Gleichspannungszwischenkreises 3 geregelt.

Die Teilbatterien können wahlweise im Entlade-Modus, im Lade-Modus oder im Standby-Modus betrieben werden und befinden sich dabei innerhalb eines vorgegebenen Ladezustandsbereichs, wie im Folgenden erläutert wird.

Die Batterievorrichtung 8 wird derart gesteuert, dass eine Teilbatterie 5 aus dem Lade-Modus in den Entlade-Modus übergeht, wenn der Ladezustand der Teilbatterie 5 einen vorgegebenen Maximalwert, beispielsweise 85% oder 90% oder 95%, erreicht. Gleichzeitig geht eine andere Teilbatterie 5 in den Lade-Modus über, so dass immer eine Teilbatterie 5 zur Aufnahme von überschüssiger Energie zur Verfügung steht. Bevorzugt wird die Teilbatterie 5, die sich im Entlade-Modus befindet in den Lade-Modus überführt. Alternativ kann eine Teilbatterie 5, die sich im Standby-Modus befindet, in den Lade-Modus übergehen.

Ferner wird die Batterievorrichtung 8 derart gesteuert, dass eine Teilbatterie 5 aus dem Entlade-Modus in den Lade-Modus übergeht, wenn der Ladezustand dieser Teilbatterie 5 einen vorgegebenen Mindestwert, beispielsweise 15% oder 10% oder 5% erreicht. Gleichzeitig wird eine andere Teilbatterie 5 in den Entlade-Modus versetzt, so dass zu jedem Zeitpunkt eine Teilbatterie 5 bereit zur Abgabe von Energie ist. Bevorzugt wird die Teilbatterie 5 in den Entlade-Modus überführt, welche sich im Lade-Modus befindet. Alternativ kann die Teilbatterie 5 in den Entlade-Modus übergehen, welche sich im Standby-Modus befindet.

Erfindungsgemäß geht eine Teilbatterie 5 in den Standby-Modus über, wenn der Ladezustand dieser Teilbatterie 5 einen vorgegebenen Standby-Ladezustand erreicht. Dieser Standby-Ladezustand liegt im Bereich von 50% bis 75%, bevorzugt bei ca. 66%.

Die Brennstoffzellen 14 der Energieversorgungseinrichtung 1 sind über DC/DC-Wandler 15 mit dem Gleichspannungszwischenkreis 3 verbunden. Die Brennstoffzellen 14 sind als Festoxidbrennstoffzellen ausgebildet, welche mit gasförmigem Wasserstoff als Brennstoff betrieben werden. Der Brennstoff wird von einem Reformer 13 bereitgestellt, in welchem der Brennstoff aus einem Kraftstoff, z. B. aus Diesel, erzeugt wird. Die Regelung der Kraftstoffzufuhr und damit auch der Brennstoffzufuhr zu den Brennstoffzellen 14 erfolgt über eine Regeneratorsteuerung 12. Die Regeneratorsteuerung 12 stellt die Kraftstoffzufuhr zu dem Reformer 13 in Abhängigkeit von der Summe der Ströme der Teilbatterien 5 ein. Hierzu werden die Ströme der Teilbatterien 5 mittels mehrerer Strommesseinrichtungen 9 gemessen. Die gemessenen Werte werden in einem Summierer 10 summiert und der Regeneratorsteuerung 12 zugeführt. Ferner werden die Ströme der Brennstoffzellen 14 über Strommesseinrichtungen 16 erfasst und der Regeneratorsteuerung 12 zugeführt. Ferner wird über Summierer 10, 17 die Summe der Batterieströme und Brennstoffzellenströme gebildet und ebenfalls der Regeneratorsteuerung 12 zugeführt.

In einer Abwandlung des Ausführungsbeispiels ist anstelle des Reformers 13 eine Brennstoffbereitstellungseinrichtung vorgesehen, die den Brennstoff speichert und bedarfsweise an die Brennstoffzellen 14 abgibt.

Das Drehstromnetz 4 des Stromnetzes 2 ist über mehrere DC/AC-Wandler 18 mit dem Gleichspannungszwischenkreis 3 verbunden. Die Steuerung der DC/AC-Wandler 18 erfolgt derart, dass der DC/AC-Wandler eine vorgegebene Wechselspannung in dem Drehstromnetz 4 einstellt. In dem Drehstromnetz 4 ist eine Spannungs- und Frequenzmesseinrichtung 19 vorgesehen, deren Messwerte zur Steuerung der DC/AC-Wandler 18 verwendet werden.

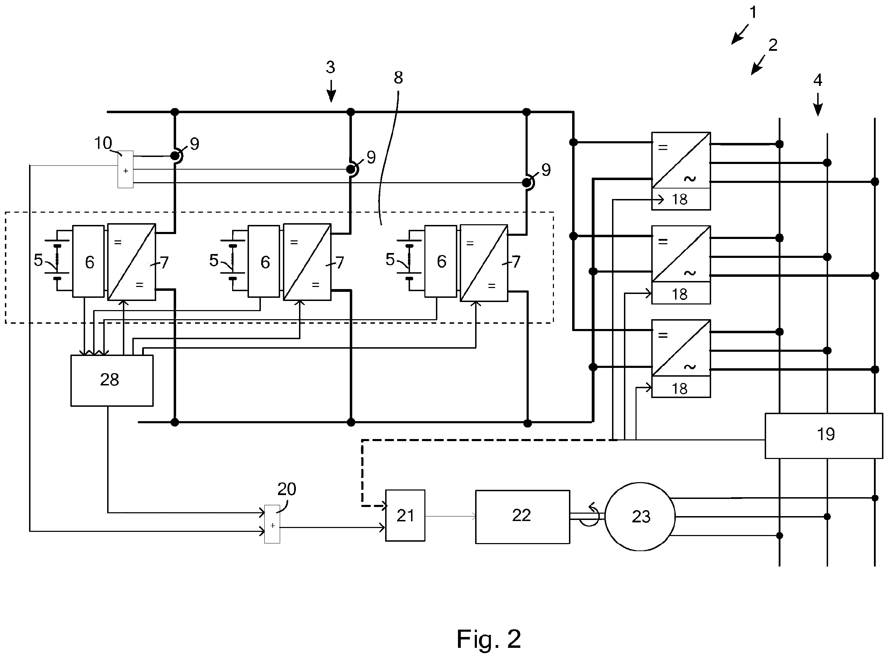

In **Figur 2** ist ein zweites Ausführungsbeispiel eines erfindungsgemäßen Energieversorgungssytems 1 dargestellt. Das Energieversorgungssystem 1 weist als Energiequelle einen Generator 23 auf, welcher über einen Verbrennungsmotor 22 angetrieben wird. Der Generator 23 erzeugt Drehstrom und speist diesen das Drehstromnetz 4 des Stromnetzes 2 ein. Zur Steuerung des Verbrennungsmotors 22 und/oder des Generators 23 ist eine Generatorsteuerung 21 vorgesehen, welche die Kraftstoffzufuhr zu dem Verbrennungsmotor 22 in Abhängigkeit von der der Summe der Ströme der Teilbatterien 5 einstellt. Hierzu ist die Generatorsteuerung 22 mit den Strommesseinrichtungen 9 über den Summierer 10 verbunden. Alternativ oder zusätzlich kann die Kraftstoffzufuhr zu dem Verbrennungsmotor 22 in Abhängigkeit von der Frequenz und/oder Spannung des Drehstromnetzes 4 eingestellt werden. Hierzu kann die Generatorsteuerung 21 optional mit der Spannungs- und Frequenzmesseinrichtung 19 des Drehstromnetzes 4 verbunden werden.

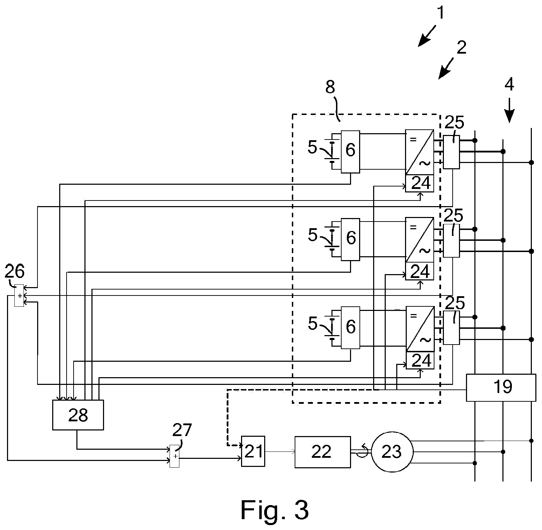

Die **Figur 3** zeigt ein drittes Ausführungsbeispiel eines Energieversorgungssystems 1 gemäß der Erfindung. Bei diesem Ausführungsbeispiel ist die Batterievorrichtung 8 zwischenkreisfrei an das Stromnetz 2 angebunden. Die Teilbatterien 5 sind jeweils über als bidirektionale DC/AC-Wandler ausgebildete Laderegler 24 mit dem Drehstromnetz 4 des Stromnetzes 2 verbunden. Zwischen den Ladereglern 24 und dem Drehstromnetz 4 ist jeweils eine Strommesseinrichtung 25 vorgesehen. Die mittels der Strommesseinrichtungen 25gemessenen Werte werden in einem Summierer 26 summiert und der Generatorsteuerung 21 über einen weiteren Summierer 27 zugeführt.

Die vorstehend beschriebenen Energieversorgungssysteme weisen jeweils ein Stromnetz 2 auf, welches mit einer Batterievorrichtung 8 zur Zwischenspeicherung von Energie verbunden ist. Die Batterievorrichtung 8 weist mehrere Teilbatterien 5 auf und ist derart ausgestaltet, dass eine erste Teilbatterie 5 in einem Lade-Modus betreibbar ist, in welchem die Teilbatterie 5 zur Aufnahme überschüssiger Energie aus dem Stromnetz 2 aufladbar ist, während eine zweite Teilbatterie 5 in einem Entlade-Modus betreibbar ist, in welchem die Teilbatterie 5 zur Abgabe zusätzlicher Energie in das Stromnetz 2 entladbar ist. Bei dem beschriebenen Verfahren zum Betrieb eines Stromnetzes 2, wobei das Stromnetz 2 mit einer Batterievorrichtung 8 zur Zwischenspeicherung von Energie verbunden ist, und wobei die Batterievorrichtung 8 mehrere Teilbatterien 5 aufweist, wird und eine erste Teilbatterie 5 in einem Lade-Modus betrieben, in welchem die Teilbatterie 5 zur Aufnahme überschüssiger Energie aus dem Stromnetz 2 aufladbar ist, während eine zweite Teilbatterie 5 in einem Entlade-Modus betrieben wird, in welchem die Teilbatterie 5 zur Abgabe zusätzlicher Energie in das Stromnetz 2 entladbar ist. Hierdurch kann die Lebensdauer der Batterievorrichtung 8 erhöht werden.

### Bezugszeichenliste

- 1: Energieversorgungssystem
- 2: Stromnetz
- 3: Gleichspannungszwischenkreis
- 4: Drehstromnetz
- 5: Teilbatterie
- 6: Batterie-Management-System
- 7: Laderegler
- 8: Batterievorrichtung
- 9: Strommesseinrichtung
- 10: Summierer
- 11: Spannungsmesseinrichtung
- 12: Regeneratorsteuerung
- 13: Reformer
- 14: Brennstoffzelle
- 15: DC/DC-Wandler
- 16: Strommesseinrichtung
- 17: Summierer
- 18: DC/AC-Wandler
- 19: Spannungs- und Frequenzmesseinrichtung
- 20: Summierer
- 21: Generatorsteuerung
- 22: Motor
- 23: Generator
- 24: Laderegler
- 25: Strommesseinrichtung
- 26: Summierer
- 27: Summierer
- 28: Batteriemanagement

- A: Lastkurve eines Generators/einer Brennstoffzelle
- B: Lastkurve mit Pufferung durch Batterievorrichtung

## Patentansprüche

1. Verfahren zum Betrieb eines Stromnetzes (2), insbesondere eines Stromnetzes eines Wasserfahrzeugs, wobei das Stromnetz mit einer Batterievorrichtung (8) zur Zwischenspeicherung von Energie verbunden ist, wobei die Batterievorrichtung (8) drei Teilbatterien (5) aufweist, die als Lithium-Ionen-Batterien ausgebildet sind, und dass wenigstens eine erste Teilbatterie (5) in einem Lade-Modus betrieben wird, in welchem die Teilbatterie (5) zur Aufnahme überschüssiger Energie aus dem Stromnetz (2) aufladbar ist, während wenigstens eine zweite Teilbatterie (5) in einem Entlade-Modus betrieben wird, in welchem die Teilbatterie (5) zur Abgabe zusätzlicher Energie in das Stromnetz (2) entladbar ist,
**dadurch gekennzeichnet, dass**
eine erste Teilbatterie (5) aus dem Lade-Modus in den Entlade-Modus übergeht, wenn der Ladezustand der ersten Teilbatterie (5) einen vorgegebenen Maximalwert erreicht, wobei eine zweite Teilbatterie (5) aus dem Entlade-Modus in den Lade-Modus übergeht, wenn der Ladezustand der zweiten Teilbatterie (5) einen vorgegebenen Mindestwert erreicht,
wobei die erste oder die zweite Teilbatterie in einen Standby-Modus übergeht, wenn der Ladezustand der ersten oder zweiten Teilbatterie einen vorgegebenen Standby-Ladezustand erreicht, welcher im Bereich von 50% bis 75% liegt, wobei wenigstens eine dritte Teilbatterie (5) der Batterievorrichtung (8) in einem Standby-Modus betrieben wird, in welchem die dritte Teilbatterie (5) nicht aufladbar und nicht entladbar ist, wobei die dritte Teilbatterie (5) im Standby-Modus einen Standby-Ladezustand aufweist, welcher abhängig von einer Batteriechemie der dritten Teilbatterie ausgewählt wird und im Bereich von 50% bis 75% liegt, wobei die dritte Teilbatterie (5) aus dem Standby-Modus in den Entlade-Modus oder den Lade-Modus übergeht, wenn eine erste Teilbatterie (5) oder eine zweite Teilbatterie (5) in den Standby-Ladezustand übergeht.

2. Verfahren nach Anspruch 1, wobei eine Teilbatterie (5) im Lade-Modus nicht entladbar ist und/oder eine Teilbatterie (5) im Entlade-Modus nicht aufladbar ist.

3. Verfahren nach einem der vorhergehenden Ansprüche, wobei die Kraftstoffzufuhr einer Brennstoffzelle (14) und/oder eines Generators (23) in Abhängigkeit von der Summe der Ströme der Teilbatterien (5) eingestellt wird.

4. Verfahren nach einem der vorhergehenden Ansprüche, wobei die Teilbatterien (5) jeweils über einen Laderegler (7) mit einem Gleichspannungszwischenkreis (3) des Stromnetzes (2) verbunden sind, wobei der Ladereger (7) eine vorgegebene Gleichspannung in dem Gleichspannungszwischenkreis (3) einstellt.

5. Verfahren nach Anspruch 4, wobei der Gleichspannungszwischenkreis (3) über einen DC/AC-Wandler (18) mit einem Wechselspannungsnetz (4) des Stromnetzes (2) verbunden ist, wobei der DC/AC-Wandler (18) eine vorgegebene Wechselspannung in dem Wechselspannungsnetz (4) einstellt.

6. Energieversorgungssystem, insbesondere für ein Wasserfahrzeug, mit einem Stromnetz (2), welches mit einer Batterievorrichtung (8) zur Zwischenspeicherung von Energie verbunden ist, wobei die Batterievorrichtung (8) drei Teilbatterien (5) aufweist, die als Lithium-Ionen-Batterien ausgebildet sind, und derart ausgestaltet ist, dass eine erste Teilbatterie (5) in einem Lade-Modus betreibbar ist, in welchem die Teilbatterie (5) zur Aufnahme überschüssiger Energie aus dem Stromnetz (2) aufladbar ist, während eine zweite Teilbatterie (5) in einem Entlade-Modus betreibbar ist, in welchem die Teilbatterie (5) zur Abgabe zusätzlicher Energie in das Stromnetz (2) entladbar ist,
**dadurch gekennzeichnet, dass**
die erste Teilbatterie (5) aus dem Lade-Modus in den Entlade-Modus übergeht, wenn der Ladezustand der ersten Teilbatterie (5) einen vorgegebenen Maximalwert erreicht, wobei die zweite Teilbatterie (5) aus dem Entlade-Modus in den Lade-Modus übergeht, wenn der Ladezustand der zweiten Teilbatterie (5) einen vorgegebenen Mindestwert erreicht,
wobei die Batterievorrichtung (8) derart konfiguriert ist, dass die erste oder die zweite Teilbatterie in einen Standby-Modus übergeht, wenn der Ladezustand der ersten oder zweiten Teilbatterie einen vorgegebenen Standby-Ladezustand erreicht, welcher im Bereich von 50% bis 75% liegt und
dass wenigstens eine dritte Teilbatterie (5) der Batterievorrichtung (8) in einem Standby-Modus betrieben wird, in welchem die dritte Teilbatterie (5) nicht aufladbar und nicht entladbar ist, wobei die dritte Teilbatterie (5) im Standby-Modus einen Standby-Ladezustand aufweist, welcher abhängig von einer Batteriechemie der dritten Teilbatterie ausgewählt wird und im Bereich von 50% bis 75% liegt, wobei die dritte Teilbatterie (5) aus dem Standby-Modus in den Entlade-Modus oder den Lade-Modus übergeht, wenn die erste Teilbatterie (5) oder die zweite Teilbatterie (5) in den Standby-Ladezustand übergeht.

7. Energieversorgungssystem nach Anspruch 6, wobei die Batterievorrichtung (8) derart ausgestaltet ist, dass eine dritte Teilbatterie (5) in einem Standby-Modus betreibbar ist.

8. Energieversorgungssystem nach einem der Ansprüche 6 oder 7, **dadurch gekennzeichnet, dass** das Energieversorgungsystem (1) eine Brennstoffzelle (14) und/oder einen Generator (23) aufweist.

## Claims

1. Method for operating a power grid (2), in particular a power grid of a watercraft, wherein the power grid is connected to a battery device (8) for the intermediate storage of energy, wherein the battery device (8) has three component-batteries (5), which are in the form of lithium-ion batteries, and in that at least a first component-battery (5) is operated in a charging mode in which the component-battery (5) can be charged in order to absorb excess energy from the power grid (2) while at least a second component-battery (5) is operated in a discharging mode in which the component-battery (5) can be discharged in order to output additional energy into the power grid (2),
**characterized in that**
a first component-battery (5) changes from the charging mode into the discharging mode if the state of charge of the first component-battery (5) reaches a predefined maximum value, a second component-battery (5) changing from the discharging mode into the charging mode if the state of charge of the second component-battery (5) reaches a predefined minimum value,
wherein the first or the second component-battery changes into a standby mode if the state of charge of the first or second component-battery reaches a predefined standby state of charge which is in the range from 50% to 75%, at least a third component-battery (5) of the battery device (8) being operated in a standby mode in which the third component-battery (5) cannot be charged and cannot be discharged, the third component-battery (5) having, in the standby mode, a standby state of charge which is selected as a function of a battery chemistry of the third component-battery and is in the range from 50% to 75%, the third component-battery (5) changing from the standby mode into the discharging mode or the charging mode when a first component-battery (5) or a second component-battery (5) changes into the standby state of charge.

2. Method according to Claim 1, wherein a component-battery (5) cannot be discharged in the charging mode, and/or a component-battery (5) cannot be charged in the discharging mode.

3. Method according to one of the preceding claims, wherein the motor fuel supply of a fuel cell (14) and/or of a generator (23) is set as a function of the sum of the currents of the component-batteries (5).

4. Method according to one of the preceding claims, wherein the component-batteries (5) are each connected to a direct voltage intermediate circuit (3) of the power grid (2) via a charge controller (7), wherein the charge controller (7) sets a predefined direct voltage in the direct voltage intermediate circuit (3).

5. Method according to Claim 4, wherein the direct voltage intermediate circuit (3) is connected to an alternating voltage grid (4) of the power grid (2) via a DC/AC converter (18), wherein the DC/AC converter (18) sets a predefined alternating voltage in the alternating voltage grid (4).

6. Energy supply system, particularly for a watercraft, having a power grid (2) which is connected to a battery device (8) for the intermediate storage of energy, wherein the battery device (8) has three component-batteries (5), which are in the form of lithium-ion batteries, and is configured in such a way that a first component-battery (5) can be operated in a charging mode in which the component-battery (5) can be charged in order to absorb excess energy from the power grid (2) while a second component-battery (5) can be operated in a discharging mode in which the component-battery (5) can be discharged in order to output additional energy into the power grid (2),
**characterized in that**
the first component-battery (5) changes from the charging mode into the discharging mode if the state of charge of the first component-battery (5) reaches a predefined maximum value, the second component-battery (5) changing from the discharging mode into the charging mode if the state of charge of the second component-battery (5) reaches a predefined minimum value,
wherein the battery device (8) is configured such that the first or the second component-battery goes into a standby mode if the state of charge of the first or second component-battery reaches a predefined standby state of charge which is in the range from 50% to 75%, and
**in that** at least a third component-battery (5) of the battery device (8) is operated in a standby mode in which the third component-battery (5) cannot be charged and cannot be discharged, the third component-battery (5) having, in the standby mode, a standby state of charge which is selected as a function of a battery chemistry of the third component-battery and is in the range from 50% to 75%, the third component-battery (5) changing from the standby mode into the discharging mode or the charging mode when the first component-battery (5) or the second component-battery (5) changes into the standby state of charge.

7. Energy supply system according to Claim 6, wherein the battery device (8) is configured in such a way that a third component-battery (5) can be operated in a standby mode.

8. Energy supply system according to one of Claims 6 or 7, **characterized in that** the energy supply system (1) has a fuel cell (14) and/or a generator (23).

## Revendications

1. Procédé pour faire fonctionner un réseau électrique (2), notamment un réseau électrique d'un engin nautique, dans lequel le réseau électrique est raccordé à un dispositif à batteries (8) pour le stockage intermédiaire d'énergie, dans lequel le dispositif à batteries (8) comporte trois batteries partielles (5), qui sont réalisées sous la forme de batteries aux ions lithium, et dans lequel au moins une première batterie partielle (5) fonctionne dans un mode de charge dans lequel la batterie partielle (5) peut être chargée pour recevoir de l'énergie excédentaire du réseau électrique (2), tandis qu'au moins une deuxième batterie partielle (5) fonctionne dans un mode de décharge dans lequel la batterie partielle (5) peut être déchargée pour délivrer de l'énergie supplémentaire dans le réseau électrique (2),
**caractérisé en ce qu'**une première batterie partielle (5) passe du mode de charge au mode de décharge lorsque l'état de charge de la première batterie partielle (5) atteint une valeur maximale prédéterminée, dans lequel une deuxième batterie partielle (5) passe du mode de décharge au mode de charge lorsque l'état de charge de la deuxième batterie partielle (5) atteint une valeur minimale prédéterminée,
dans lequel la première ou la deuxième batterie partielle passe en mode de veille lorsque l'état de charge de la première ou de la deuxième batterie partielle atteint un état de charge de veille prédéterminé qui se situe dans la plage de 50 à 75%, dans lequel au moins une troisième batterie partielle (5) du dispositif à batteries (8) fonctionne dans un mode de veille dans lequel la troisième batterie partielle (5) ne peut pas être chargée et ne peut pas être déchargée, dans lequel la troisième batterie partielle (5) présente, en mode de veille, un état de charge de veille, qui est choisi en fonction d'une chimie de batterie de la troisième batterie partielle et se situe dans la plage de 50 % à 75 %, dans lequel la troisième batterie partielle (5) passe du mode de veille au mode de décharge ou au mode de charge lorsqu'une première batterie partielle (5) ou une deuxième batterie partielle (5) passe en mode de veille.

2. Procédé selon la revendication 1, dans lequel une batterie partielle (5) ne peut pas être déchargée dans le mode de charge et/ou une batterie partielle (5) ne peut pas être chargée dans le mode de décharge.

3. Procédé selon l'une des revendications précédentes, dans lequel l'alimentation en combustible d'une pile à combustible (14) et/ou d'un générateur (23) est réglée en fonction de la somme des courants des batteries partielles (5).

4. Procédé selon l'une des revendications précédentes, dans lequel les batteries partielles (5) sont respectivement raccordées par l'intermédiaire d'un régulateur de charge (7) à un circuit intermédiaire à courant continu (3) du réseau électrique (2), dans lequel le régulateur de charge (7) règle une tension continue prédéterminée dans le circuit intermédiaire à courant continu (3).

5. Procédé selon la revendication 4, dans lequel le circuit intermédiaire à courant continu (3) est raccordé par l'intermédiaire d'un convertisseur continu/alternatif (18) à un réseau à courant alternatif (4) du réseau électrique (2), dans lequel le convertisseur continu/alternatif (18) règle une tension alternative prédéterminée dans le réseau à courant alternatif (4).

6. Système d'alimentation en énergie, notamment pour un engin nautique, comportant un réseau électrique (2) qui est raccordé à un dispositif à batteries (8) pour le stockage intermédiaire d'énergie, dans lequel le dispositif à batteries (8) comporte trois batteries partielles (5), qui sont réalisées sous la forme de batteries aux ions lithium, et est conçu de manière à ce qu'une première batterie partielle (5) puisse fonctionner dans un mode de charge dans lequel la batterie partielle (5) peut être chargée pour recevoir de l'énergie excédentaire du réseau électrique (2), tandis qu'une deuxième batterie partielle (5) peut fonctionner dans un mode de décharge dans lequel la batterie partielle (5) peut être déchargée pour délivrer de l'énergie supplémentaire dans le réseau électrique (2),
**caractérisé en ce que** la première batterie partielle (5) passe du mode de charge au mode de décharge lorsque l'état de charge de la première batterie partielle (5) atteint une valeur maximale prédéterminée, dans lequel la deuxième batterie partielle (5) passe du mode de décharge au mode de charge lorsque l'état de charge de la deuxième batterie partielle (5) atteint une valeur minimale prédéterminée,
dans lequel le dispositif à batteries (8) est configuré de manière à ce que la première ou la deuxième batterie partielle passe en mode de veille lorsque l'état de charge de la première ou de la deuxième batterie partielle atteint un état de charge de veille prédéterminé qui se situe dans la plage de 50 à 75% et
**en ce qu'**une troisième batterie partielle (5) du dispositif à batteries (8) fonctionne dans un mode de veille dans lequel la troisième batterie partielle (5) ne peut pas être chargée et ne peut pas être déchargée, dans lequel la troisième batterie partielle (5) présente, en mode de veille, un état de charge de veille, qui est choisi en fonction d'une chimie de batterie de la troisième batterie partielle et se situe dans la plage de 50 % à 75 %, dans lequel la troisième batterie partielle (5) passe du mode de veille au mode de décharge ou au mode de charge lorsque la première batterie partielle (5) ou la deuxième batterie partielle (5) passe en mode de veille.

7. Système d'alimentation en énergie selon la revendication 6, dans lequel le dispositif à batteries (8) est conçu de manière à ce qu'une troisième batterie partielle (5) puisse fonctionner en mode de veille.

8. Système d'alimentation en énergie selon l'une des revendications 6 ou 7, **caractérisé en ce que** le système d'alimentation en énergie (1) comporte une pile à combustible (14) et/ou un générateur (23).
